# EUROPEAN PATENT SPECIFICATION

(11) **EP 3 201 486 B1**
(45) Date of publication and mention of the grant of the patent: **11.11.2020**
(21) Application number: 15846675.5
(22) Date of filing: 29.09.2015
(51) Int. Cl.: F16F 1/04, F16F 1/12

(54) **SPRING DEVICE**
FEDERVORRICHTUNG
DISPOSITIF À RESSORT

(30) Priority: 29.09.2014 US 201462056992 P
(43) Date of publication of application: 09.08.2017
(73) Proprietor: Enhance Technologies, LLC, San Diego, CA 92121 (US)
(72) Inventor: DOYLE, Mark C., Del Mar, CA 92014 (US)
(74) Representative: Boult Wade Tennant LLP
(86) International application number: PCT/US2015/053036
(87) International publication number: WO 2016/054108

(56) References cited:
- WO-A2-2011/001132
- DE-A1- 3 420 804
- DE-A1-102005 023 100
- NL-C- 66 369
- US-A- 2 661 206
- US-A- 2 684 238
- US-A- 2 684 238
- US-A- 3 032 329
- US-A- 3 032 329
- US-A- 5 490 662
- US-A- 5 551 674
- US-A1- 2010 222 819
- US-A1- 2014 158 839

## Description

### RELATED APPLICATION DATA

The present application claims benefit of co-pending provisional Serial No. 62/056,992, filed September 29, 2014.

### FIELD OF THE INVENTION

The present invention relates to spring devices, and more particularly to holders for coupling to ends of a spring, and to methods for making and using such spring devices.

### BACKGROUND

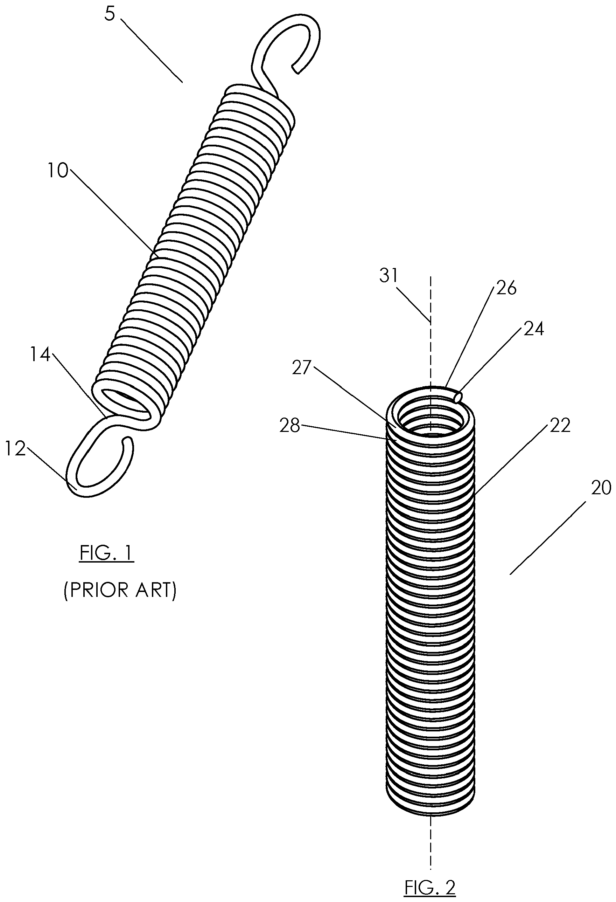

FIG. 1 depicts a typical extension (tension) spring 5 including spiral body coils 10, hook 12, and hook stress point 14. Extension springs serve to apply a tension load to other machine elements, and to store energy. Extension springs generally fail (break) at the hook 12, in particular at points of high stress such as hook stress point 14. Hooks 12, being relatively large, may also occupy valuable space inside of compact machinery.

Thus, an alternative way of connecting extension springs to other elements that avoids unnecessary stress points of the hooks and/or that is more compact than conventional hooks would be useful.

US 2661206 discusses suspension means for vehicles, and more especially suspension devices in which use is made of spiral springs for this purpose.

### SUMMARY

The present invention is directed to spring devices and, more particularly, to holders for coupling to ends of a spring, and methods for making using such devices.

In accordance with an exemplary embodiment, a spring assembly is provided that includes a spring including a plurality of coils wound helically between first and second ends of the spring; and a spring disc attached to the first end of the spring between a first end coil terminating the first end and a second end coil adjacent the first end coil.

In accordance with another embodiment, a method is provided for making a spring assembly that includes providing a spring including a plurality of coils wound helically between first and second ends of the spring, a first end coil terminating the first end and a second end coil adjacent the first end coil; and attaching a spring disc to the first end of the spring between the first and second end coils.

Other aspects and features of the present invention will become apparent from consideration of the following description taken in conjunction with the accompanying drawings. The invention is directed to a spring assembly as claimed in Claim 1 and to a method for making a spring assembly as claimed in Claim 11.

### BRIEF DESCRIPTION OF THE DRAWINGS

The present invention is best understood from the following detailed description when read in conjunction with the accompanying drawings. It will be appreciated that the exemplary devices shown in the drawings are not necessarily drawn to scale, with emphasis instead being placed on illustrating the various aspects and features of the illustrated embodiments.
FIG. 1 is a perspective view of a conventional extension spring including hooks on its ends.
FIG. 2 is a perspective view of an exemplary embodiment of a hook-less extension spring.
FIG. 2A is a perspective view of an alternative embodiment of a hook-less extension spring including variable pitch coils.
FIGS. 3A-3D are various views of an exemplary embodiment of a spring disc.
FIG. 4A is a side view of an exemplary embodiment of a spring assembly including the spring of FIG. 2 and a pair of spring discs, such as those shown in FIGS. 3A-3D, attached to ends of the spring.
FIG. 4B is a cross-sectional view of the spring assembly of FIG. 4A taken along line 4A-4A.
FIG. 4C is an end view of the spring assembly of FIG. 4A.
FIG. 5A is a side view of the spring assembly of FIG. 4A with a connector element coupled to one of the spring discs.
FIG. 5B is a cross-sectional view of the spring assembly of FIG. 5A taken along line 5A-5A.
FIG. 5C is a detail of one end of the spring assembly of FIG. 5A.
FIG. 5D is an end view of the spring assembly of FIG. 5A.
FIGS. 6A and 6B are perspective views of a spring assembly in unextended and extended positions, respectively.
FIG. 7 is a perspective view of an exemplary embodiment of an arm support system that may include a spring assembly, such as that shown in FIG. 4A.

### DETAILED DESCRIPTION OF THE EXEMPLARY EMBODIMENTS

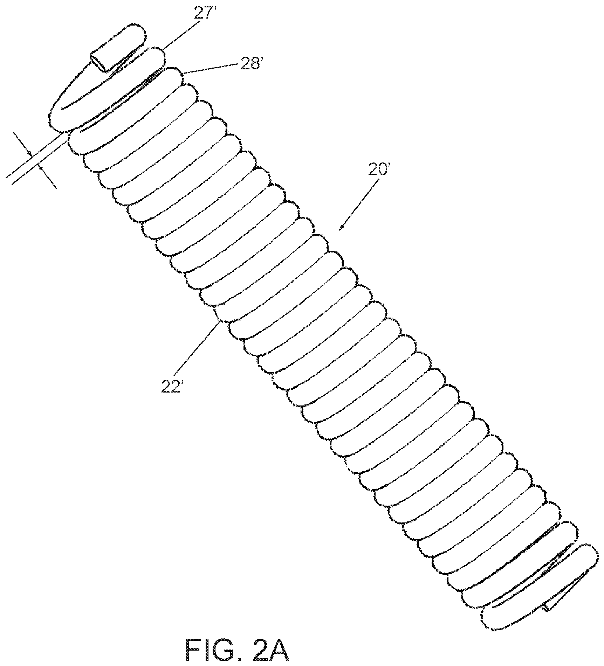

Turning to the drawings, FIGS. 2-6B show an exemplary embodiment of a spring assembly 100 that includes a hook-less extension spring 20 and a pair of spring discs 30 coupled to respective ends of the spring 20.

FIG. 2 shows an exemplary embodiment of a hook-less extension spring 20 including a plurality of spiral body coils 22 formed from wire 26 having two coil ends 24. Each coil end 24 includes a first end coil 27 at the very end terminating at the end of the wire 26 and a second end coil 28 adjacent the first end coil 27. In a relaxed or lowest energy state, adjacent coils may abut one another, e.g., to provide a closed spring in its low energy state, yet may be resiliently separated, e.g., by extending the ends 24 away from one another. Alternatively, as shown in FIG. 2A, the first and second end coils 27,' 28' may be spaced apart from one another in a relaxed state to define a predefined gap 29,' while the remaining coils 22' may abut one another, which may facilitate installation of the spring disc (not shown) between the first and second end coils 27,' 28.' In exemplary embodiments, the spring 20 may be formed from a variety of materials, e.g., metal, plastic, and the like, having desired elasticity and/or other mechanical properties.

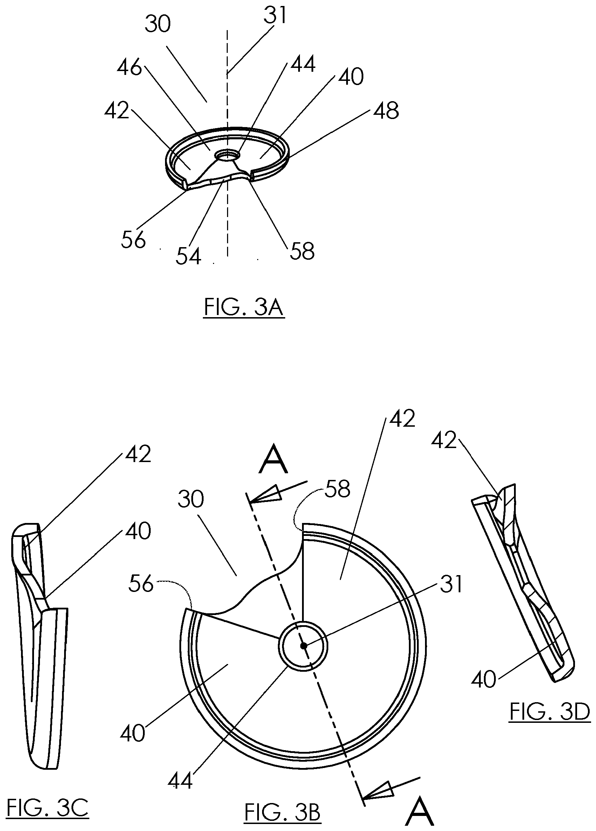

Turning to FIGS. 3A-3D, an exemplary embodiment of a spring disc 30 is shown that includes attachment feature 44, optional boss 46, optional rim 48, notch 54, low surface 42, high surface 40, low notch end 56, and high notch end 58. Attachment feature 44 may be a hole, threaded hole, tab, hook, or other securing feature, e.g., for coupling the end of the spring assembly 100 to a cable or other element, e.g., along central axis 31.

The spring disc 30 generally includes an at least partial annular disc with the low surface 42 offset around the circumference of the disc from the high surface 40 such that the notch 54 separates the high and low surfaces 40, 42, as shown in FIG. 3B. As can be seen in FIGS. 3A and 3C, the disc 30 has a spiral or helical shape such that the disc 30 extends out of an imaginary plane perpendicular to the central axis 31. In this manner, the low surface 42 may be offset along the central axis 31 relative to the high surface sufficiently to facilitate the joining of the spring disc 30 to the hook-less spring 20, as described below. For example, the low surface 42 may be lower than the high surface 40 by approximately the diameter of the wire 26 in the hook-less spring 20, e.g., between about 3-4 mm. In addition, the disc 30 may have a substantially uniform pitch or slope between the high surface 40 and the low surface 42, e.g., corresponding to the pitch of the end coils of the spring 20. FIG. 3D presents a cross-sectional view of the spring disc 30, taken along line A-A of FIG. 3B, showing the high surface 40 in relation to the low surface 42.

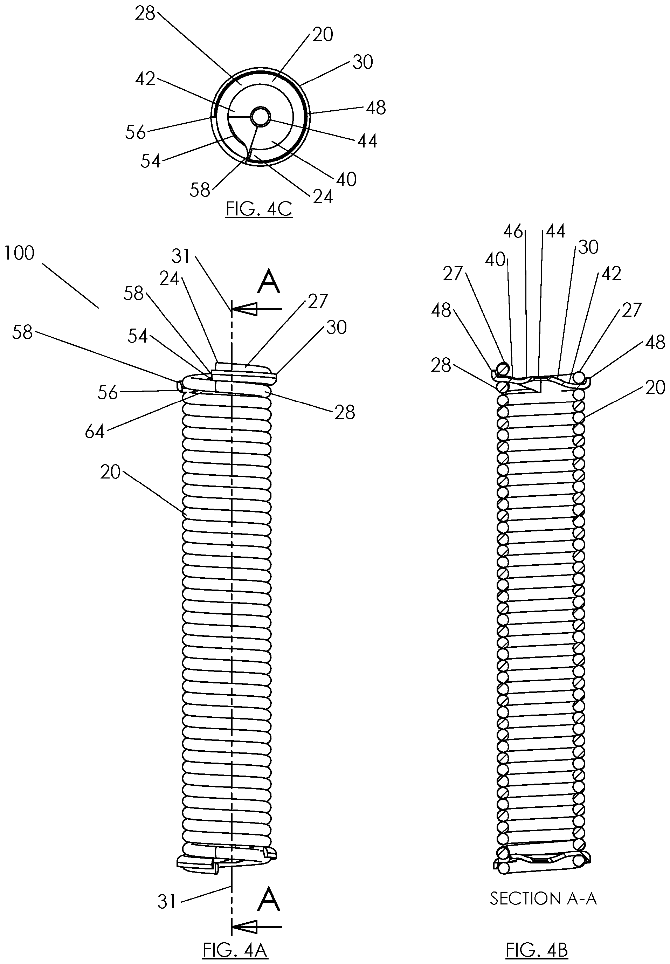

Turning to FIGS. 4A-4C, an exemplary embodiment of a spring assembly 100 is shown that includes a pair of spring discs 30, such as that shown in FIGS. 3A-3D, coupled to a hook-less spring 20, such as that shown in FIG. 2. As shown, a spring disc 30 is inserted into each end of the hook-less spring 20, e.g., in between first end coil 27 and second end coil 28 at the very end of the spring 20. The notch 54 in the spring disc 30 provides a passageway for the first end coil 27 (above the spring disc 30) to transition into the second end coil 28 (below the spring disc 30). The spring disc 30 may spread the end coils 27 and 28, resulting in a gap 64, as shown in FIG. 4A. Alternatively, gap 64 may be formed into the hook-less spring 20 at the time of manufacture, for example, by forming the hook-less spring 20 with a space between the first end coil 27 and the second end coil 28.

Optionally, a rim 48 may be provided around the outer perimeter of the spring disc 30, e.g., extending upwardly from the top surface, which may keep the spring disc 30 substantially concentric with the hook-less spring 20 and the central axis 31, e.g., by preventing the spring disc 30 from moving away from the center of the hook-less spring 20. The rim 48 may be formed after the spring disc 30 is joined to the hook-less spring 20, for example, by crimping or upsetting a portion of the spring disc 30, or the rim 48 may be preformed in the spring disc 30. As best seen in FIG. 3B, the rim 48 may extend substantially continuously around the perimeter of the spring disc 30 between the low notch end 56 and the high notch end 58, although alternatively, the rim 48 may be intermittent, e.g., defined by a plurality of tabs (not shown) spaced apart from one another around the perimeter of the spring disc 30.

In addition or alternatively, an optional boss 46 may be provided, e.g., around the hole 44, which may also maintain the spring disc 30 substantially concentric with the hook-less spring 20. The spring disc 30 may be formed using a variety of materials, e.g., metal or plastic, and/or methods, e.g., stamping, machining, molding, and the like. For example, the nonplanar shape and/or features of the spring disc 30 may be formed when the spring disc is molded, machined or otherwise formed, or the spring disc 30 may be formed from a planar base and then the nonplanar shape may be formed into the base.

FIG. 4B is a cross-sectional view of the spring assembly 100 taken along line A-A in FIG. 4A, and shows the first end coil 27 lying substantially in contact with the high surface 40 and the low surface 42 of the spring disc 30, which together approximate the spiral shape of the first end coil 27. Again, optional rim 48 and/or boss 46 may act to keep the spring disc 30 substantially concentric with the hook-less spring 20.

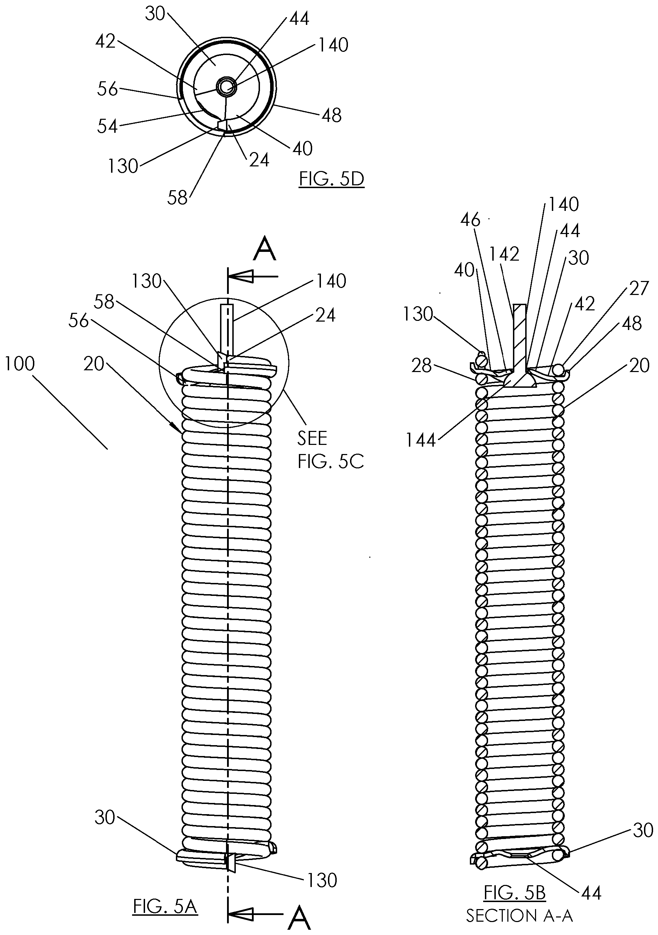

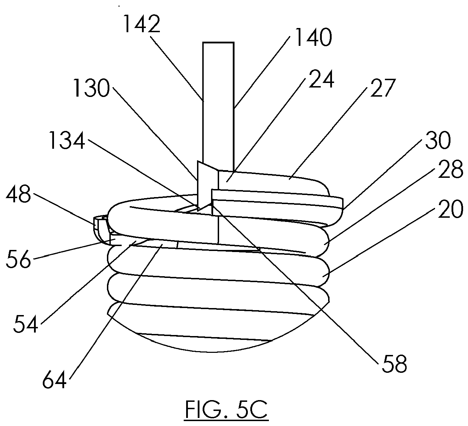

FIGS. 5A and 5B show the spring assembly 100 with the tip 24 of the first end coil 27 (best seen in FIG. 2) deformed to provide an optional tab end 130, which may interfere with high notch end 58, preventing the spring disc 30 from rotating out of the hook-less spring 20 (e.g., preventing it from "unscrewing" itself out of the hook-less spring 20). Alternatively, a notch or other feature (not shown) may be created in the first end coil 27 to prevent movement of the spring disc 30 once installed. FIG. 5C provides a magnified view of the optional tab end 130 interfering with the high notch end 58.

Other features that interfere with, or attach to, a portion of the spring disc 30 to keep it from rotating out of the hook-less spring 20 may also be provided. For example, the coil end 24 may be bent sideways or downwards, or the first end coil 27 may be fastened to the spring disc 30 with a fastener, e.g., a clip, wire, or screw (not shown), and/or may be bonded with adhesives, or may be welded, soldered, and/or fused to the spring disc 30. The spring disc 30 may also be fixed to other machine elements in a way that prevents the spring disc 30 from rotating, thus preventing it from rotating out of the hook-less spring 20.

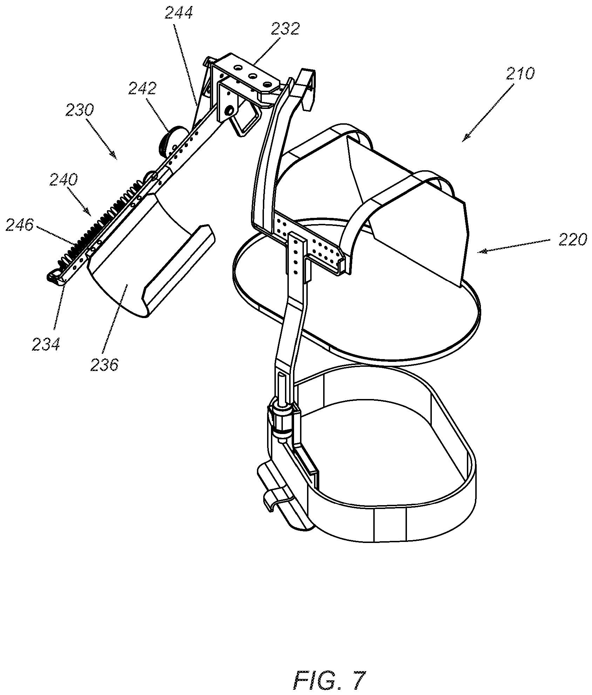

Optional fastening element 140 may extend from one or both spring discs 30 (only one shown in FIGS. 5A and 5B for simplicity), which may be a fastener, cable, or other suitable attachment element. The fastening element 140 may include an elongate shaft 142 terminating in an enlarged portion 144, which may interfere with (or otherwise connect to) the hole or attachment feature 44, and allow the fastening element 140 to apply tensile loads to the spring disc 30 (which, in turn, may apply a tensile load to the first end coil 27, and thus the entire hook-less spring 20). For example, the fastening element 140 may include a cable, pin, or other elongate member 142 with an enlarged integral head 144. Alternatively, instead of an integral head 144, a separate nut or other element (not shown) that may be threaded onto the end of the elongate member 142. In an exemplary embodiment, an elongate member may be coupled to each end of the spring to couple the spring to other components of a mechanical device, such as an arm support system, such as that shown in FIG. 7 and/or as disclosed in U.S. Publication Nos. 1012/ 0184880 and 2014/ 0158839, the entire disclosures of which are expressly incorporated by reference herein.

The free end of the shaft 142 may be coupled to a cable or other machine element (not shown), e.g., using cooperating connectors, fasteners, threads, welding, soldering, and the like (also not shown). Alternatively, an end of a cable or other machine element may be coupled directly to the spring disc 30, e.g., through the hole or other attachment feature 44.

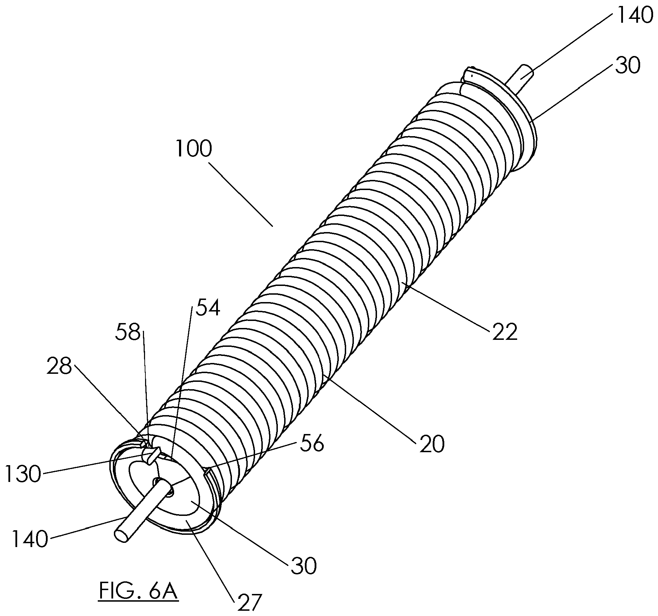

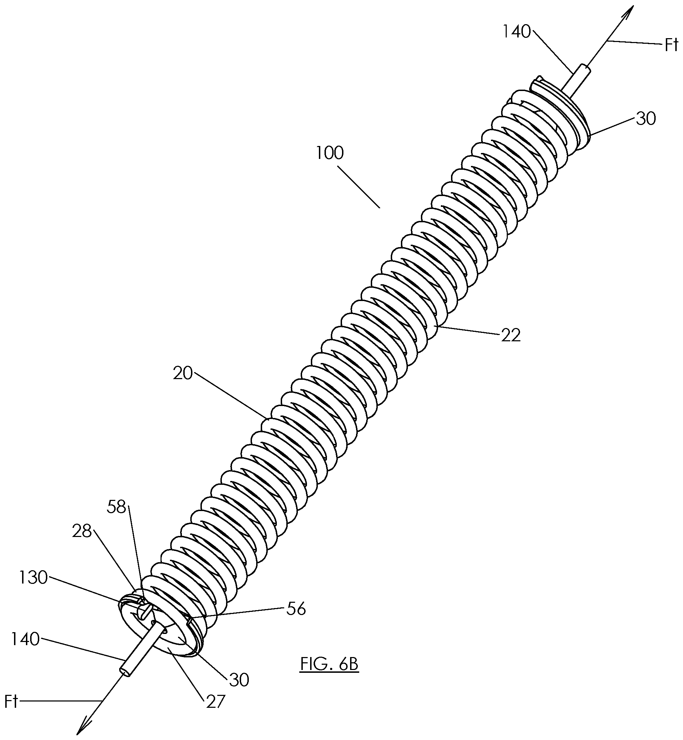

FIG.6A shows the spring assembly 100 with a spring disc 30 and fastening element 140 installed at each end, and the spring 20 in a relaxed (unloaded) or other low energy state. FIG. 6B shows the spring assembly 100 extended under tensile axial force Ft, which acts on the spring disc 30 through the fastening element 140. The spring disc 30 in turn acts to apply an axial load to the first end coil 27, which in turn transmits the load to the rest of the coils 22.

Using the spring disc 30, a cable or other fastening element may be coupled directly to the ends of the spring 20 thereby minimizing wasted space adjacent the spring 20. In addition, the spring disc 30 may distribute forces on the ends of the spring 20 onto the perimeter of the first end coil 27, thereby reducing the risk of spring failure as may occur with conventional spring hook ends (as shown in FIG. 1).

Turning to FIG. 7, an exemplary embodiment of an arm support system 210 is shown that includes one or more spring assemblies, which may be similar to those described elsewhere herein. Generally, the system 210 includes a torso mounted harness 220, and one or more adaptive arm supports 230 (only one shown) coupled to the harness 220. The adaptive arm support 220 may be biased with a resilient element (e.g., including a spring assembly similar to those described elsewhere herein) and/or other components, to impart a desired force to the arm of a user (not shown), for example, to bear all, or part of, the weight of the arm. The force may vary with arm position or be substantially constant through its range of motion.

In the embodiment shown in FIG. 7, the arm support 230 includes a first arm support segment 232 pivotally coupled to the harness 220 about a first vertical axis such that the first arm support segment 232 is rotatable substantially horizontally about the first vertical axis relative to the harness 220, and a second arm support segment 234 pivotally coupled to the first arm support segment 232 such that the second arm support segment 234 is rotatable about a second axis generally orthogonal to the first vertical axis. Optionally, the second arm support segment 234 may carry an arm rest 236 and/or other component for receiving the user's arm.

In addition, the arm support 230 includes one or more compensation elements 240, e.g., including a pulley arrangement 242 mounted on the second arm support segment 234 and a cable 244 wrapped partially around the pulley 242 and including a first end coupled to a resilient member 246, e.g., a spring assembly similar to those described elsewhere herein, and a second coupled to the first arm support segment 232 such that at least a portion of a force from the resilient member is applied to the second arm support segment 232 to the generate the offset force.

While the invention is susceptible to various modifications, and alternative forms, specific examples thereof have been shown in the drawings and are herein described in detail. It should be understood, however, that the invention is not to be limited to the particular forms or methods disclosed, but to the contrary, the invention is to cover all modifications, equivalents and alternatives falling within the scope of the appended claims.

## Claims

1. A spring assembly (100) comprising:
A hook-less extension spring (20) including a plurality of coils (22) wound helically between first and second ends (24) of the hook-less extension spring; and
a pair of spring discs (30) coupled to respective ends of the hook-less extension spring (20), wherein each spring disc includes a notch (54), a low notch end (56), and a high notch end (58), wherein one spring disc of the pair of spring discs is attached to the first end (24) of the hook-less extension spring (20) between a first end coil (27) terminating the first end and a second end coil (28) adjacent the first end coil (27), wherein the notch (54) in the spring disc (30) provides a passageway for the first coil (27) to transition into the second end coil (28),
wherein the spring assembly further comprises a feature on an end tip (24) of the first end coil (27) that engages the spring disc (30) to lock the spring disc relative to the hook-less extension spring or to prevent movement of the spring disc relative to the hook-less extension spring,
**characterized in that**,
the feature on the end tip of the first end coil is a deformed tip (24) configured to provide a tab end (130) that interferes with the high notch end (58) to prevent the spring disc (30) from rotating out of the hook-less extension spring (20) or is a notch created in the first end coil (27) to prevent movement of the spring disc (30).

2. The spring assembly of claim 1, wherein the notch (54) of the spring disc (30) is comprised in a portion of the periphery of the spring disc (30) that receives a transition region of the spring (20) between the first end coil (27) and the second end coil (28).

3. The spring assembly of claim 1, wherein the spring disc (30) further comprises a rim (48) extending around a portion of the first end coil (27) to secure the spring disc (30) relative to the first end (24) of the spring (20).

4. The spring assembly of claim 1, wherein the spring disc (30) comprises an attachment feature (44) for coupling a connector element to the first end (24) of the spring.

5. The spring assembly of claim 4, wherein the attachment feature comprises a hole (44) through the center of the spring disc and, further optionally, comprising an elongate connector member (140) comprising a first end (142) received through the hole (44) and an enlarged head (144) for preventing removal of the connector member first end from the hole.

6. The spring assembly of claim 1, wherein the spring disc comprises a surface that extends at least partially across the diameter of the first end of the spring, and a rim extending at least partially around a periphery of the surface.

7. The spring assembly of claim 6, wherein the surface has a helical or spiral shape.

8. The spring assembly of claim 1, wherein the tab end comprises a crimped tab (130) formed in the end tip.

9. A spring assembly according to anyone of claims 1 to 5,
the first end terminating at a first end coil and including a second end coil adjacent the first end coil;
the spring disc comprising a helical or spiral surface secured between the first end coil and the second end coil, and a hole extending through the surface; and
a first elongate member coupled to the first spring disc via the hole for coupling the spring assembly to a machine element.

10. The spring assembly of claim 9, wherein the second end terminates at a third end coil and includes a fourth end coil adjacent the third end coil, the spring apparatus further comprising:
a second spring disc comprising a helical or spiral surface secured between the third end coil and the fourth end coil, and a hole extending through the surface; and
a second elongate member coupled to the second spring disc via the hole for coupling the spring assembly to a machine element.

11. A method for making a spring assembly (100), comprising:
providing a hook-less extension spring (20) including a plurality of coils (22) wound helically between first and second ends (24) of the spring (20), a first end coil terminating the first end and a second end coil adjacent the first end coil; and
attaching each spring disc of a pair of spring discs (30) to a respective end of the hook-less extension spring (20) between the first and second end coils, wherein each spring disc includes a notch (54), a low notch end (56), and a high notch (58), wherein one spring disc of the pair of spring discs is attached to the first end (24) of the hook-less extension spring (20) between a first end coil (27) terminating the first end and a second end coil (28) adjacent the first end coil (27), wherein the notch (54) in the spring disc (30) provides a passageway for the first end coil (27) to transition into the second end coil (28), and
wherein an end tip (24) of the first end coil (27) comprises a feature that engages the spring disc to lock the spring disc relative to the spring or to prevent movement of the spring disc relative to the spring
**characterized in that**,
the feature on the end tip of the first end coil is a deformed tip (24) configured to provide a tab end (130) that interferes with the high notch end (58) to prevent the spring disc (30) from rotating out of the hook-less extension spring (20) or is a notch created in the first end coil (27) to prevent movement of the spring disc (30).

12. The method of claim 11, further comprising coupling an elongate connector member (140) to the spring disc and, optionally, wherein the spring disc comprises a hole (44) therethrough and wherein coupling the elongate connector member comprises inserting the connector member through the hole such that an enlarged head of the connector member engages the spring disc.

## Patentansprüche

1. Federanordnung (100), umfassend:
eine hakenlose Zugfeder (20), welche eine Mehrzahl von Windungen (22) umfasst, welche schraubenförmig zwischen einem ersten und einem zweiten Ende (24) der hakenlosen Zugfeder gewickelt sind; und
ein Paar von Federscheiben (30), welche mit jeweiligen Enden der hakenlosen Zugfeder (20) gekoppelt sind, wobei jede Federscheibe eine Aussparung (54), ein niedriges Aussparungsende (56) und ein hohes Aussparungsende (58) umfasst, wobei eine Federscheibe des Paars von Federscheiben zwischen einer ersten Endwindung (27), welche das erste Ende abschließt, und einer zweiten Endwindung (28), welche der ersten Endwindung (27) benachbart ist, an dem ersten Ende (24) der hakenlosen Zugfeder (20) befestigt ist, wobei die Aussparung (54) in der Federscheibe (30) einen Durchgang für die erste Windung (27) bereitstellt, um in die zweite Endwindung (28) überzugehen,
wobei die Federanordnung ferner ein Merkmal an einer Endspitze (24) der ersten Endwindung (27) umfasst, welches mit der Federscheibe (30) in Eingriff tritt, um die Federscheibe in Bezug auf die hakenlose Zugfeder zu blockieren oder um eine Bewegung der Federscheibe in Bezug auf die hakenlose Zugfeder zu verhindern,
**dadurch gekennzeichnet, dass**
das Merkmal an der Endspitze der ersten Endwindung eine verformte Spitze (24) ist, welche dazu eingerichtet ist, ein Vorsprungsende (130) bereitzustellen, welches mit dem hohen Aussparungsende (58) interferiert, um zu verhindern, dass sich die Federscheibe (30) aus der hakenlosen Zugfeder (20) herausdreht, oder eine Aussparung ist, welche in der ersten Endwindung (27) erzeugt ist, um eine Bewegung der Federscheibe (30) zu verhindern.

2. Federanordnung nach Anspruch 1, wobei die Aussparung (54) der Federscheibe (30) in einem Abschnitt des Umfangs der Federscheibe (30) umfasst ist, welcher einen Übergangsbereich der Feder (20) zwischen der ersten Endwindung (27) und der zweiten Endwindung (28) aufnimmt.

3. Federanordnung nach Anspruch 1, wobei die Federscheibe (30) ferner einen Rand (48) umfasst, welcher sich um einen Abschnitt der ersten Endwindung (27) herum erstreckt, um die Federscheibe (30) in Bezug auf das erste Ende (24) der Feder (20) zu sichern.

4. Federanordnung nach Anspruch 1, wobei die Federscheibe (30) ein Befestigungsmerkmal (44) zum Koppeln eines Verbindungselements mit dem ersten Ende (24) der Feder umfasst.

5. Federanordnung nach Anspruch 4, wobei das Befestigungsmerkmal ein Loch (44) durch die Mitte der Federscheibe umfasst und ferner optional ein längliches Verbindungselement (140) umfasst, welches ein durch das Loch (44) aufgenommenes erstes Ende (142) und einen vergrößerten Kopf (144) zum Verhindern eines Entfernens des ersten Endes des Verbindungselements aus dem Loch umfasst.

6. Federanordnung nach Anspruch 1, wobei die Federscheibe eine Fläche, welche sich wenigstens teilweise über den Durchmesser des ersten Endes der Feder hinweg erstreckt, und einen Rand umfasst, welcher sich wenigstens teilweise um einen Umfang der Fläche herum erstreckt.

7. Federanordnung nach Anspruch 6, wobei die Fläche eine schraubenförmige oder spiralförmige Form aufweist.

8. Federanordnung nach Anspruch 1, wobei das Vorsprungsende einen gequetschten Vorsprung (130) umfasst, welcher in der Endspitze gebildet ist.

9. Federanordnung nach einem der Ansprüche 1 bis 5,
wobei das erste Ende an einer ersten Endwindung abschließt und eine zweite Endwindung umfasst, welche der ersten Endwindung benachbart ist;
die Federscheibe eine schraubenförmige oder spiralförmige Fläche, welche zwischen der ersten Endwindung und der zweiten Endwindung gesichert ist, und ein Loch umfasst, welches sich durch die Fläche erstreckt; und
ein erstes längliches Element zum Koppeln der Federanordnung mit einem Maschinenelement über das Loch mit der ersten Federscheibe gekoppelt ist.

10. Federanordnung nach Anspruch 9, wobei das zweite Ende an einer dritten Endwindung abschließt und eine vierte Endwindung umfasst, welche der dritten Endwindung benachbart ist, wobei die Federvorrichtung ferner umfasst:
eine zweite Federscheibe, welche eine schraubenförmige oder spiralförmige Fläche, welche zwischen der dritten Endwindung und der vierten Endwindung gesichert ist, und ein Loch umfasst, welches sich durch die Fläche erstreckt; und
ein zweites längliches Element, welches zum Koppeln der Federanordnung mit einem Maschinenelement über das Loch mit der zweiten Federscheibe gekoppelt ist.

11. Verfahren zur Herstellung einer Federanordnung (100), umfassend:
Bereitstellen einer hakenlosen Zugfeder (20), welche eine Mehrzahl von Windungen (22), welche schraubenförmig zwischen einem ersten und einem zweiten Ende (24) der Feder (20) gewickelt sind, eine erste Endwindung, welche das erste Ende abschließt, und eine zweite Endwindung umfasst, welche der ersten Endwindung benachbart ist; und
Befestigen jeder Federscheibe eines Paars von Federscheiben (30) an einem jeweiligen Ende der hakenlosen Zugfeder (20) zwischen der ersten und der zweiten Endwindung, wobei jede Federscheibe eine Aussparung (54), ein niedriges Aussparungsende (56) und ein hohes Aussparungsende (58) umfasst, wobei eine Federscheibe des Paars von Federscheiben zwischen einer ersten Endwindung (27), welche das erste Ende abschließt, und einer zweiten Endwindung (28), welche der ersten Endwindung (27) benachbart ist, an dem ersten Ende (24) der hakenlosen Zugfeder (20) befestigt ist, wobei die Aussparung (54) in der Federscheibe (30) einen Durchgang für die erste Endwindung (27) bereitstellt, um in die zweite Endwindung (28) überzugehen, und
wobei eine Endspitze (24) der ersten Endwindung (27) ein Merkmal umfasst, welches mit der Federscheibe in Eingriff tritt, um die Federscheibe in Bezug auf die Feder zu blockieren oder um eine Bewegung der Federscheibe in Bezug auf die Feder zu verhindern,
**dadurch gekennzeichnet, dass**
das Merkmal an der Endspitze der ersten Endwindung eine verformte Spitze (24) ist, welche dazu eingerichtet ist, ein Vorsprungsende (130) bereitzustellen, welches mit dem hohen Aussparungsende (58) interferiert, um zu verhindern, dass sich die Federscheibe (30) aus der hakenlosen Zugfeder (20) herausdreht, oder eine Aussparung ist, welche in der ersten Endwindung (27) erzeugt ist, um eine Bewegung der Federscheibe (30) zu verhindern.

12. Verfahren nach Anspruch 11, ferner umfassend ein Koppeln eines länglichen Verbindungselements (140) mit der Federscheibe und, optional, wobei die Federscheibe ein Loch (44) dadurch umfasst und wobei das Koppeln des länglichen Verbindungselements ein Einsetzen des Verbindungselements durch das Loch umfasst, so dass ein vergrößerter Kopf des Verbindungselements mit der Federscheibe in Eingriff tritt.

## Revendications

1. Ensemble ressort (100) comprenant :
un ressort de traction sans crochet (20) comportant une pluralité de spires (22) enroulées de manière hélicoïdale entre des première et deuxième extrémités (24) du ressort de traction sans crochet ; et
une paire de disques à ressort (30) couplés aux extrémités respectives du ressort de traction sans crochet (20), où chaque disque à ressort comporte une encoche (54), une extrémité d'encoche basse (56) et une extrémité d'encoche haute (38), où un disque à ressort de la paire de disques à ressort est fixé à la première extrémité (24) du ressort de traction sans crochet (20) entre une première spire d'extrémité (27) se terminant à la première extrémité et une deuxième spire d'extrémité (28) adjacente à la première spire d'extrémité (27), où l'encoche (54) dans le disque à ressort (30) fournit un passage pour que la première spire (27) passe à la deuxième spire d'extrémité (28),
où l'ensemble ressort comprend en outre une caractéristique sur une pointe d'extrémité (24) de la première spire d'extrémité (27) qui s'engage avec le disque à ressort (30) pour verrouiller le disque à ressort par rapport au ressort de traction sans crochet ou pour empêcher le mouvement du disque à ressort par rapport au ressort de traction sans crochet,
**caractérisé en ce que**,
la caractéristique sur la pointe d'extrémité de la première spire d'extrémité est une pointe déformée (24) configurée pour fournir une extrémité de languette (130) qui interfère avec l'extrémité d'encoche haute (58) pour empêcher le disque à ressort (30) de tourner hors du ressort de traction sans crochet (20) ou est une encoche créée dans la première spire d'extrémité (27) pour empêcher le mouvement du disque à ressort (30).

2. Ensemble ressort de la revendication 1, dans lequel l'encoche (54) du disque à ressort (30) est comprise dans une partie de la périphérie du disque à ressort (30) qui reçoit une région de passage du ressort (20) entre la première spire d'extrémité (27) et la deuxième spire d'extrémité (28).

3. Ensemble ressort de la revendication 1, dans lequel le disque à ressort (30) comprend en outre un rebord (48) s'étendant autour d'une partie de la première spire d'extrémité (27) pour fixer le disque à ressort (30) par rapport à la première extrémité (24) du ressort (20).

4. Ensemble ressort de la revendication 1, dans lequel le disque à ressort (30) comprend une caractéristique de fixation (44) pour coupler un élément de liaison à la première extrémité (24) du ressort.

5. Ensemble ressort de la revendication 4, dans lequel la caractéristique de fixation comprend un trou (44) à travers le centre du disque à ressort et, en outre facultativement, comprenant un organe de liaison allongé (140) comprenant une première extrémité (142) reçue à travers le trou (44) et une tête élargie (144) pour empêcher le retrait de la première extrémité d'organe de liaison du trou.

6. Ensemble ressort de la revendication 1, dans lequel le disque à ressort comprend une surface qui s'étend au moins partiellement sur le diamètre de la première extrémité du ressort, et un rebord s'étendant au moins partiellement autour d'une périphérie de la surface.

7. Ensemble ressort de la revendication 6, dans lequel la surface a une forme hélicoïdale ou en spirale.

8. Ensemble ressort de la revendication 1, dans lequel l'extrémité de languette comprend une languette sertie (130) formée dans la pointe d'extrémité.

9. Ensemble ressort selon l'une quelconque des revendications 1 à 5,
la première extrémité se terminant à une première spire d'extrémité et comportant une deuxième spire d'extrémité adjacente à la première spire d'extrémité ;
le disque à ressort comprenant une surface hélicoïdale ou en spirale fixée entre la première spire d'extrémité et la deuxième spire d'extrémité, et un trou s'étendant à travers la surface ; et
un premier organe allongé couplé au premier disque à ressort par l'intermédiaire du trou pour coupler l'ensemble ressort à un élément de machine.

10. Ensemble ressort de la revendication 9, dans lequel la deuxième extrémité se termine à une troisième spire d'extrémité et comporte une quatrième spire d'extrémité adjacente à la troisième spire d'extrémité, l'appareil à ressort comprenant en outre :
un deuxième disque à ressort comprenant une surface hélicoïdale ou en spirale fixée entre la troisième spire d'extrémité et la quatrième spire d'extrémité, et un trou s'étendant à travers la surface ; et
un deuxième organe allongé couplé au deuxième disque à ressort par l'intermédiaire du trou pour coupler l'ensemble ressort à un élément de machine.

11. Procédé de fabrication d'un ensemble ressort (100), comprenant les étapes consistant à :
fournir un ressort de traction sans crochet (20) comportant une pluralité de spires (22) enroulées de manière hélicoïdale entre des première et deuxième extrémités (24) du ressort (20), une première spire d'extrémité se terminant à la première extrémité et une deuxième spire d'extrémité adjacente à la première spire d'extrémité ; et
fixer chaque disque à ressort d'une paire de disques à ressort (30) à une extrémité respective du ressort de traction sans crochet (20) entre les première et deuxième spires d'extrémité, où chaque ressort à disque comprend une encoche (54), une extrémité d'encoche basse (56) et une extrémité d'encoche haute (58), où un disque à ressort de la paire de disques à ressort est fixé à la première extrémité (24) du ressort de traction sans crochet (20) entre une première spire d'extrémité (27) se terminant à la première extrémité et une deuxième spire d'extrémité (28) adjacente à la première spire d'extrémité (27), où l'encoche (54) dans le disque à ressort (30) fournit un passage pour que la première spire d'extrémité (27) passe à la deuxième spire d'extrémité (28), et
dans lequel une pointe d'extrémité (24) de la première spire d'extrémité (27) comprend une caractéristique qui s'engage avec le disque à ressort pour verrouiller le disque à ressort par rapport au ressort ou pour empêcher le mouvement du disque à ressort par rapport au ressort
**caractérisé en ce que**,
la caractéristique sur la pointe d'extrémité de la première spire d'extrémité est une pointe déformée (24) configurée pour fournir une extrémité de languette (130) qui interfère avec l'extrémité d'encoche haute (58) pour empêcher le disque à ressort (30) de tourner hors du ressort de traction sans crochet (20) ou est une encoche créée dans la première spire d'extrémité (27) pour empêcher le mouvement du disque à ressort (30).

12. Procédé de la revendication 11, comprenant en outre l'étape consistant à coupler un organe de liaison allongé (140) au disque à ressort et, éventuellement, où le disque à ressort comprend un trou (44) à travers celui-ci et où le couplage de l'organe de liaison allongé comprend l'insertion de l'organe de liaison à travers le trou de sorte qu'une tête élargie de l'organe de liaison s'engage avec le disque à ressort.
